(19) Europäisches Patentamt
European Patent Office
Office européen des brevets

(11) **EP 1 865 496 A1**

(12) **EUROPEAN PATENT APPLICATION**
published in accordance with Art. 158(3) EPC

(43) Date of publication:
**12.12.2007 Bulletin 2007/50**

(51) Int Cl.:
**G10L 15/10** (2006.01)   **G10L 15/06** (2006.01)
**G10L 15/14** (2006.01)

(21) Application number: **06715448.4**

(22) Date of filing: **09.03.2006**

(86) International application number:
**PCT/JP2006/304577**

(87) International publication number:
**WO 2006/112198 (26.10.2006 Gazette 2006/43)**

(84) Designated Contracting States:
**DE FR GB**

(30) Priority: **30.03.2005 JP 2005100167**

(71) Applicant: **Pioneer Corporation**
**Tokyo 153-8654 (JP)**

(72) Inventors:
• **KOBAYASHI, Hajime,**
**c/o Corporate R & D Lab.**
**Tsurugashima-shi,**
**Saitama 350-2288 (JP)**

• **TOYAMA, Soichi,**
**c/o Corporate R & D Lab.**
**Tsurugashima-shi,**
**Saitama 350-2288 (JP)**
• **KOMAMURA, Mitsuya,**
**c/o Corporate R & D Lab.**
**Tsurugashima-shi,**
**Saitama 350-2288 (JP)**

(74) Representative: **Haley, Stephen**
**Gill Jennings & Every LLP**
**Broadgate House**
**7 Eldon Street**
**London EC2M 7LH (GB)**

(54) **VOICE RECOGNITION DEVICE, VOICE RECOGNITION METHOD, VOICE RECOGNITION PROGRAM, AND RECORDING MEDIUM**

(57)    In a sound recognition apparatus (500), upon receiving a digital sound signal, an obtaining unit (501) obtains acoustic feature quantities A and B concerning an amount of spectrum information and an amount of attribute information. Next, an element-distribution-likelihood calculating unit (502) calculates an element distribution likelihood of each subword for each of attributes. An identifying unit (506) identifies a category of an unknown sound, and a weighting unit (507) refers to a lookup table (700) for the identified category to weight a branch probability of each subword for each of the attributes. A subword-likelihood calculating unit (504) calculates a subword likelihood using the element distribution likelihood of each subword for each attribute, and the branch probability of each subword after the weighting process for each attribute. Finally, a word-likelihood calculating unit (511) calculates a word likelihood and outputs a word having the highest word likelihood as a result of recognition.

FIG.5

**Description**

TECHNICAL FIELD

The present invention relates to a sound recognition apparatus, a sound recognition method, a sound recognition program, and a recording medium that recognize sound. However, the application of the present invention is not limited to the sound recognition apparatus, the sound recognition method, the sound recognition program, and the recording medium.

BACKGROUND ART

Acoustic models used in sound recognition include a mixed distribution acoustic model. The mixed distribution acoustic model has a plurality of multidimensional Gaussian distributions and one branch probability for each subword (unit expressing syllables, phonemes, and the like).

A sound recognition apparatus that employs the mixed distribution acoustic model substitutes a feature quantity of speech in a mixed distribution of a subword, calculates a likelihood of each subword (subword likelihood), and based on this, calculates a likelihood of words (word likelihood) that are registered in a dictionary.

DISCLOSURE OF INVENTION

PROBLEM TO BE SOLVED BY THE INVENTION

However, it is thought that the mixed distribution of subword varies depending on attributes (for example, sex of a speaker, a speaking environment, etc.). Therefore, it is considered that calculation of the subword likelihood of speeches of various attributes by one fixed branch probability leads to deterioration of a recognition performance.

MEANS FOR SOLVING PROBLEM

A sound recognition apparatus, according to an invention of claim 1 employs a mixed distribution acoustic model and includes an obtaining unit that obtains acoustic feature quantities that concern an amount of spectrum information and an amount of attribute information of an unknown sound; an element-distribution-likelihood calculating unit that calculates, based on the acoustic feature quantity that is obtained by the obtaining unit and concerns the amount of spectrum information of the unknown sound and information on an element distribution to which a mixed distribution of each subword in the mixed distribution acoustic model belongs, a likelihood of the element distribution (hereinafter, "element distribution likelihood"); a changing unit that changes, based on the acoustic feature quantity that is obtained by the obtaining unit and concerns the amount of attribute information of the unknown sound, a branch probability of each subword; a subword-likelihood calculating unit that calculates, based on the branch probability changed by the changing unit and the element distribution likelihood calculated by the element-distribution-likelihood calculating unit, a likelihood of a subword (hereinafter "subword likelihood"); and a recognizing unit that recognizes, based on the subword likelihood calculated by the subword-likelihood calculating unit, the unknown sound.

A sound recognition method, according to an invention of claim 3, employs a mixed distribution acoustic model and includes obtaining acoustic feature quantities that concern an amount of spectrum information and an amount of attribute information of an unknown sound; calculating, based on the acoustic feature quantity that is obtained by the obtaining unit and concerns the amount of spectrum information of the unknown sound and information on an element distribution to which a mixed distribution of each subword in the mixed distribution acoustic model belongs, a likelihood of the element distribution (hereinafter, "element distribution likelihood"); changing, based on the acoustic feature quantity that is obtained by the obtaining unit and concerns the amount of attribute information of the unknown sound, a branch probability of each subword; calculating, based on the branch probability changed by the changing unit and the element distribution likelihood calculated by the element-distribution-likelihood calculating unit, a likelihood of a subword (hereinafter "subword likelihood"); and recognizing, based on the subword likelihood calculated by the subword-likelihood calculating unit, the unknown sound.

A sound recognition program, according to an invention of claim 4, causes a computer to execute the sound recognition method according to claim 3.

A computer-readable recording medium, according to an invention of claim 5, stores therein the sound recognition program according to claim 4.

BRIEF DESCRIPTION OF DRAWINGS

Fig. 1 is a block diagram illustrating a hardware configuration of a sound recognition apparatus according to an embodiment of the present invention;

Fig. 2 is an explanatory diagram illustrating a mixed distribution acoustic model according to the embodiment of the present invention;

Fig. 3 is an explanatory diagram illustrating one example of contents stored in an element distribution DB;

Fig. 4 is an explanatory diagram illustrating one example of contents stored in a branch probability DB;

Fig. 5 is a block diagram illustrating a functional configuration of the sound recognition apparatus according to the embodiment of the present invention;

Fig. 6 is a graph concerning a category/zone table;

Fig. 7 is an explanatory diagram illustrating contents stored in a lookup table; and

Fig. 8 is a flowchart illustrating procedures in a sound recognition process according to an example.

EXPLANATIONS OF LETTERS OR NUMERALS

| | |
|---|---|
| 109 | Microphone |
| 200 | Element distribution database |
| 210 | Branch probability database |
| 500 | Sound recognition apparatus |
| 501 | Obtaining unit |
| 502 | Element-distribution-likelihood calculating unit |
| 503 | Branch-probability changing unit |
| 504 | Subword-likelihood calculating unit |
| 505 | Recognizing unit |
| 506 | Identifying unit |
| 507 | Weighting unit |
| 510 | Category/zone table |
| 511 | Word-likelihood calculating unit |
| 512 | Dictionary |
| 700 | Lookup table |
| A, B | Acoustic feature quantity |
| S | Mixed distribution acoustic model |

BEST MODE(S) FOR CARRYING OUT THE INVENTION

Exemplary embodiments of a sound recognition apparatus, a sound recognition method, a sound recognition program, and a recording medium according to the present invention are explained in detail below with reference to the accompanying drawings.

(Hardware Configuration of Sound Recognition Apparatus)

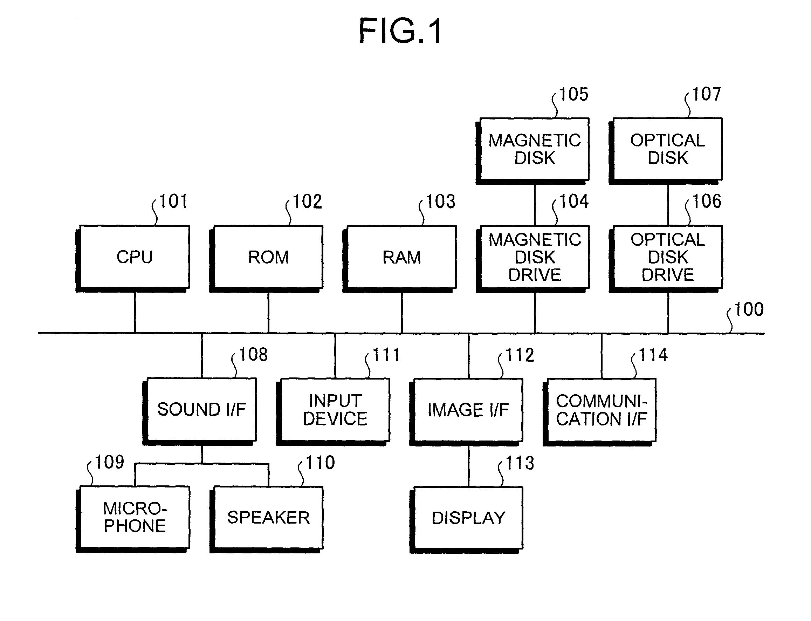

Fig. 1 is a block diagram illustrating a hardware configuration of a sound recognition apparatus according to an embodiment of the present invention. As shown in Fig. 1, the sound recognition apparatus includes a CPU 101, a ROM 102, a RAM 103, a magnetic disk drive 104, a magnetic disk 105, an optical disk drive 106, an optical disk 107, a sound I/F (interface) 108, a microphone 109, a speaker 110, an input device 111, an image I/F 112, a display 113, and a communication I/F (interface) 114. The respective components 101 to 113 are connected with a bus 100.

The CPU 101 controls the entire sound recognition apparatus. The ROM 102 stores a program such as a boot program. The RAM 103 is used as a work area of the CPU 101. The magnetic disk drive 104 controls the reading/writing of data with respect to the magnetic disk 105 in accordance with a control of the CPU 101. The magnetic disk 105 stores data that is written by a control of the magnetic disk drive 104. As the magnetic disk 105, for example, an HD (hard disk) and an FD (flexible disk) can be used.

The optical disk drive 106 controls the reading/writing of data with respect to the optical disk 107 in accordance with a control of the CPU 101. The optical disk 107 is such an attachable and detachable recording medium that data is read from the optical disk 107 in accordance with a control of the optical disk drive 106. The optical disk 107 can employ a writable recording medium. Moreover, as this attachable and detachable recording medium, an MO, a memory card, or the like can be used other than the optical disk 107.

Furthermore, the sound I/F 108 is connected to the microphone 109 for sound input and the speaker 110 for sound output. The sound received by the microphone 109 is subjected to an A/D conversion in the sound I/F 108. From the speaker, sound is output. Moreover, the input device 111 includes a remote control having a plurality of keys, a keyboard, a mouse, a touch panel, and the like that are used to input characters, numerals, various instructions, and the like.

The image I/F 112 is connected to the display 113. Specifically, the image I/F 112 is constituted of, for example, a graphic controller that controls the entire display 113, a buffer memory such as a VRAM (video RAM) that temporarily stores image data that can be instantaneously displayed, a control IC that controls the display 113 based on the image data output from the graphic controller, and the like.

On the display 113, an icon, a cursor, a menu, a window, and various kinds of data such as characters and images are displayed. The display 113 can employ, for example, a CRT, a TFT liquid crystal display, a plasma display, or the like.

Furthermore, the communication I/F 114 is connected to a network through a wireless communication or a communication cable, and functions as an interface between the network and the CPU 101. The network includes a LAN, a WAN, a public line network, a mobile telephone network, and the like.

(Configuration of Mixed Distribution Acoustic Model)

Next, a mixed distribution acoustic model according to the embodiment of the present invention is explained. The mixed distribution acoustic model is an acoustic model in which a distribution of each subword (unit expressing syllables and phonemes) is expressed in a mixed Gaussian distribution.

The mixed distribution acoustic model has a plurality of multidimensional Gaussian distributions and one branch probability for each subword. Specifically, a plurality of element distributions and one branch probability that correspond to each subword are present. For example, a mixed distribution acoustic model having N kinds of subwords and the number of mixture (indicating the number of element distribution for one state) M has (NxM) pieces of element distributions and N pieces of branch probabilities as a whole.

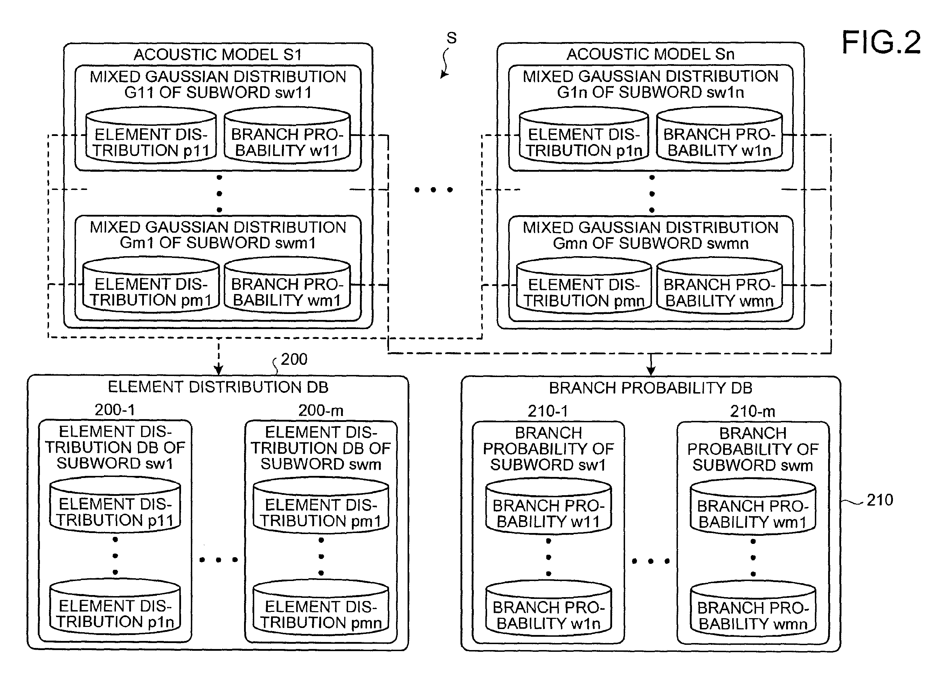

Fig. 2 is an explanatory diagram illustrating the mixed distribution acoustic model according to the embodiment of the present invention. As shown in Fig. 2, a mixed distribution acoustic model S is formed with acoustic models S1 to Sn having a number of attributes n. Each of the acoustic models S1 to Sn has mixed Gaussian distributions (G11 to Gm1, ..., G1n to Gmn) that include element distributions (p11 to pm1, ..., p1n to pmn) and branch probabilities (w11 to wm1, ..., w1n to wmn) for each of subwords sw1 to swm.

The element distribution DB (database) 200 is a set of element distribution information (p11 to pm1, ..., p1n to pmn) in the mixed distribution acoustic model S. Specifically, the element distribution DB 200 has element distribution databases 200-1 to 200-m for each of the subwords sw1 to swm, and each of the element distribution databases 200-1 to 200-m includes the element distribution information (p11 to pm1, ..., p1n to pmn).

Similarly, the branch probability DB (database) 210 is a set of branch probabilities (w11 to w1n, ..., wm1 to wmn) in the mixed distribution acoustic model S. Specifically, the branch probability DB 210 has branch probability databases 210-1 to 210-m for each of the subwords sw1 to swm, and each of the branch probability databases 210-1 to 210-m includes the element distribution information (w11 to w1n, ..., wm1 to wmn).

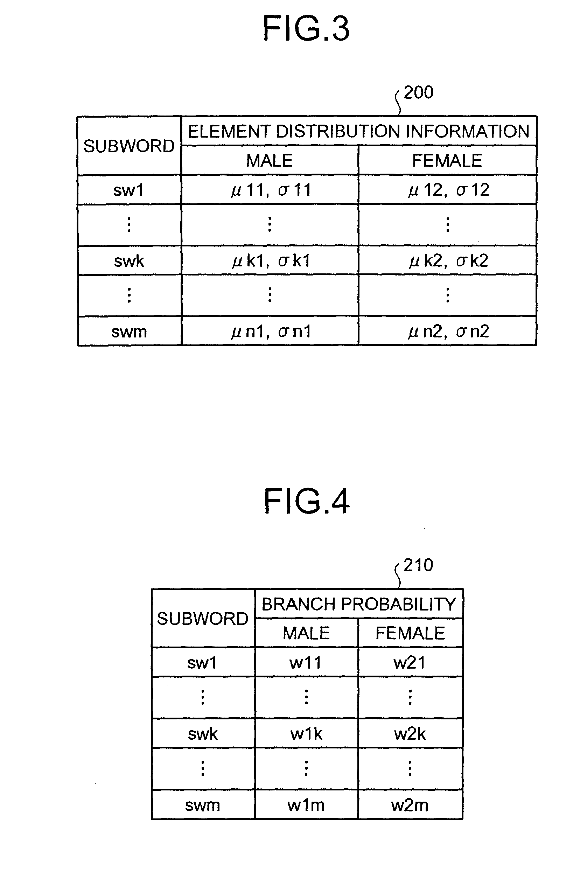

One example of contents stored in the element distribution DB 200 is explained. Fig. 3 is an explanatory diagram illustrating one example of contents stored in the element distribution DB 200. In the example shown in Fig. 3, the number of attributes n of a sound source is 2, where n=1 indicates male and n=2 indicates female. For example, the element distribution information of a subword swk includes element distribution information ($\mu$k1, $\sigma$k1) of male (n=1) and element distribution information ($\mu$k2, $\sigma$k2) of female (n=2). "$\mu$k1" is a mean vector of an element distribution pk1 of the subword swk, and "$\sigma$k1" is a covariance matrix of the element distribution pk1 of the subword swk.

One example of contents stored in the branch probability DB 210 is explained herein. Fig. 4 is an explanatory diagram illustrating one example of contents stored in the branch probability DB 210. Also in the example shown in Fig. 4, the number of attributes n of the sound source is 2, where n=1 indicates male and n=2 indicates female. For example, the branch probability of the subword swk includes a branch probability wk1 of male (n=1) and a branch probability wk2 of female (n=2).

(Functional Configuration of Sound Recognition Apparatus)

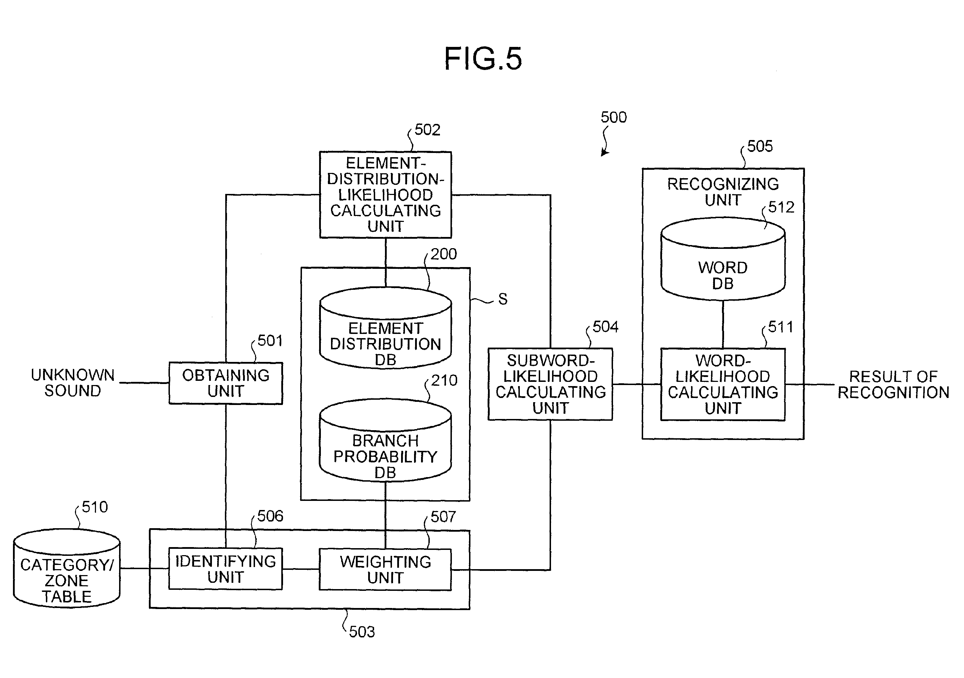

Next, a functional configuration of a sound recognition apparatus 500 according to the embodiment of the present invention is explained. Fig. 5 is a block diagram illustrating a functional configuration of the sound recognition apparatus 500 according to the embodiment of the present invention. As shown in Fig. 5, the sound recognition apparatus 500 includes an obtaining unit 501, an element-distribution-likelihood calculating unit 502, a branch-probability changing unit 503, a subword-likelihood calculating unit 504, and a recognizing unit 505.

First, the obtaining unit 501 obtains acoustic feature quantities concerning an amount of spectrum information and an amount of attribute information of an unknown sound. Specifically, an acoustic feature quantity (hereinafter, "acoustic feature quantity A") of the amount of spectrum information and an acoustic feature quantity (hereinafter, "acoustic feature quantity B") of the amount of attribute information are calculated from a digital sound signal that is obtained by performing an A/D conversion on the unknown sound.

For example, the acoustic feature quantity A is generally calculated as a vector expressed by Mel LPC cepstrum or MFCC (Mel frequency cepstrum coefficient). Specifically, the digital sound signal is divided by unit time into frames, and the acoustic feature quantity A is calculated for each of the frames. Thus, the amount of spectrum information of the unknown sound can be obtained as the acoustic feature quantity.

On the other hand, the acoustic feature quantity B can be calculated using, for example, an average value of a basic cycle. The average value of the basic cycle can be calculated as follows. First, the digital sound signal is divided into frames, and then sound determination is performed by a means based on a sound power threshold or the like to determine voiced sound/unvoiced sound, or non-speech sound. From a frame that is determined as voiced sound, the basic cycle is extracted. After the sound determination is finished for all of the frames, basic cycles are averaged. An average value PAV is specifically expressed by Equation (1).

[Equation 1]

$$PAV = \frac{\sum\limits_{i=1}^{N} stat(i) \cdot T(i)}{\sum\limits_{i=1}^{N} stat(i)} \tag{1}$$

In Equation (1), N represents the number of frames obtained by division, stat(i) represents a result of the sound determination for a frame to which "1" is substituted if determined as voiced sound and "0" is substituted if determined as sound other than voiced sound, and T(i) represents a basic cycle in a frame i. With these, the amount of attribute information of the unknown sound can be obtained as the sound feature quantity.

The element-distribution-likelihood calculating unit 502 calculates likelihood (hereinafter, "element distribution likelihood P") of an element distribution based on the acoustic feature quantity A concerning the amount of spectrum information obtained by the obtaining unit 501 and information concerning an element distribution of a subword that is set for each attribute of a sound source. Specifically, for each element distribution, the element distribution likelihood P can be calculated by applying the acoustic feature quantity A of each frame in a multidimensional Gaussian distribution that has different mean vectors and covariance matrixes.

In other words, likelihood (hereinafter "element distribution likelihood") concerning an element distribution of each of the subwords sw1 to swm is calculated using the element distribution information of each of the subwords sw1 to swm stored in the element distribution database 200 and the acoustic feature quantity A. For example, since the element distribution is a multidimensional Gaussian distribution, the element distribution likelihood Pk1 of male for the subword swk can be calculated by substituting a value of the acoustic feature quantity A in a probability density function as a variable, using the mean vector μk1 of the element distribution pk1 of the subword swk and the covariance matrix σk1 of the element distribution pk1 of the subword swk.

Similarly, the element distribution likelihood Pk2 of female can be calculated by substituting a value of the acoustic feature quantity A in the probability density function as a variable, using the mean vector μk2 of the element distribution pk2 of the subword swk and the covariance matrix σk2 of the element distribution pk2 of the subword swk.

The branch-probability changing unit 503 changes a rate of the branch probability of a subword that is set for each attribute based on the acoustic feature quantity B concerning the amount of attribute information of the unknown sound obtained by the obtaining unit 501. Specifically, the rate of the branch probability of a subword set for each attribute is changed by an identifying unit 506 and a weighting unit 507.

This identifying unit 506 identifies a category of the unknown sound based on the acoustic feature quantity B concerning the amount of attribute information obtained by the obtaining unit 501. Specifically, the identifying unit 506 identifies the category of the unknown sound using a category/zone table 510. The category/zone table 510 is explained.

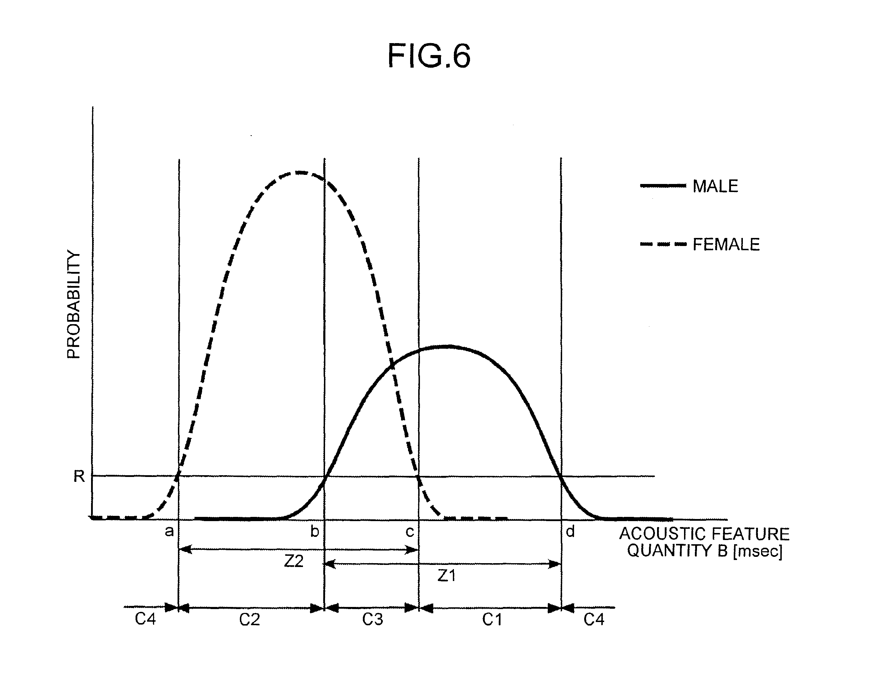

Fig. 6 is a graph of the category/zone table 510, and shows relation between attribute and category. In Fig. 6, the vertical axis represents a probability and the horizontal axis represents the acoustic feature quantity B. Further, a heavy-line waveform shows an attribute distribution of male, and a heavy-dotted-line waveform shows an attribute distribution of female. Moreover, t represents a threshold, and a probability value of an attribute distribution higher than the threshold t is regarded as having high possibility of being the corresponding attribute. Specifically, b and d are values for which the attribute distribution of male correspond to the threshold t, and a section [b, d] is a zone (male zone) Z1 in which possibility of being male is high. Similarly, a and c are values for which the attribute distribution of female correspond to the threshold t, and a section [a, c] is a zone (female zone) Z2 in which possibility of being female is high.

As shown in Fig. 6, a category C1 is a section [c, d] in which only the male zone Z1 is present, a category C2 is a section [a, b] in which only the female zone Z2 is present, a category C3 is a section [b, c] in which the male zone Z1 and the female zone Z2 are overlapped, and a category C4 is a section that corresponds neither to the male zone Z1 nor the female zone Z2. Using the graph shown in Fig. 6, the identifying unit 506 can identify the category to which the unknown sound belongs by applying the graph shown in Fig. 6 to the acoustic feature quantity B.

The weighting unit 507 weights the branch probability of a subword set for each attribute of the sound source, based on the category identified by the identifying unit 506. Specifically, the weighting unit 507 weights the branch probability that is stored in the branch probability database 210 using a lookup table.

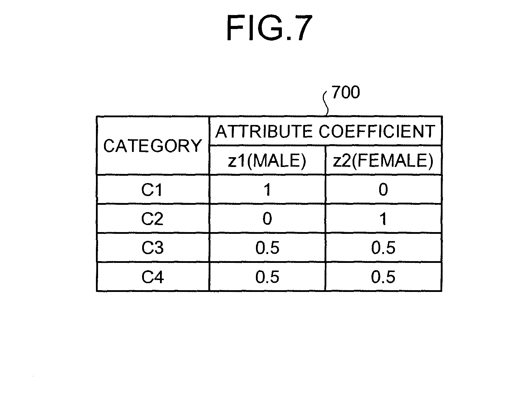

Contents stored in the lookup table are explained herein. Fig. 7 is an explanatory diagram illustrating an example of contents stored in the lookup table. A lookup table 700 shown in Fig. 7 is created based on the categories C1 to C4 shown in Fig. 6. An attribute coefficient is a value determined for each attribute (male and female) according to a category to which the acoustic feature quantity B belongs, and the sum thereof is to be 1. As shown in Fig. 7, when a value of the acoustic feature quantity B corresponds to the category C1 that corresponds only to the male zone Z1, an attribute coefficient z1 of male is z1=1, and an attribute coefficient z2 of female is z2=0.

Moreover, when a value of the acoustic feature quantity B corresponds to the category C2 that corresponds only to the female zone Z2, the attribute coefficient z1 of male is z1=0, and the attribute coefficient z2 of female is z2=1. Furthermore, when a value of the acoustic feature quantity B corresponds to the category C3 in which to the male zone Z1 and the female zone Z2 are overlapped, the attribute coefficient z1 of male is z1=0.5, and the attribute coefficient z2 of female is z2=0.5. Similarly, when a value of the acoustic feature quantity B corresponds to the category C4 that corresponds neither the male zone Z1 nor the female zone Z2, the attribute coefficient z1 of male is z1=0.5, and the attribute coefficient z2 of female is z2=0.5.

Weighting of the branch probability of each subword is performed using the attribute coefficients z1 and z2 thus determined in the lookup table 700. For example, a weighting process of the branch probabilities wk1 and wk2 of the subword swk is expressed as Equation (2).

$$(Wk1, \ Wk2) = (z1 \cdot wk1, \ z2 \cdot wk2) \tag{2}$$

Wk1 represents a branch probability of male after the weighting process of the subword swk is performed, and Wk2 represents a branch probability of female after the weighting process of the subword swk is performed. For example, when a value of the acoustic feature quantity B corresponds to the category C1 that corresponds only to the male zone Z1, a value of Equation (2) above is expressed as Equation (3) below.

$$(Wk1, \ Wk2) = (z1 \cdot wk1, \ z2 \cdot wk2)$$
$$= (1 \cdot wk1, \ 0 \cdot wk2)$$
$$= (wk1, \ 0) \tag{3}$$

The subword-likelihood calculating unit 504 calculates the subword likelihood based on the acoustic feature quantity concerning the amount of spectrum information obtained by the obtaining unit 501, the information on the element distribution of a subword set for each attribute, and the branch probability of a subword that is weighted for each attribute by the weighting unit 507. Specifically, the subword-likelihood calculating unit 504 calculates the subword likelihood based on the element distribution likelihood that is calculated by the element-distribution-likelihood calculating unit 502, and the branch probability of a subword that is weighted for each attribute by the weighting unit 507. A subword likelihood Qkn when the attribute number of the subword swk is n can be calculated by, for example, Equation (4) below.

[Equation 2]

$$Qkn = \sum_{j=1}^{n} Wkj \cdot Pkj \qquad (4)$$

When the number of attributes n=2, in other words, when the attribute is male and female, for the subword swk, for example, the element distribution likelihood Pk1 of male and the element distribution likelihood Pk2 of female of the subword swk, and the branch probability Wk1 of male and the branch probability Wk2 of female after the weighting process of the subword swk can be used, and Equation (4) above is expressed as Equation (5) below.
$$Qkn=Wk1 \cdot Pk1+Wk2+Pk2 \qquad (5)$$

Moreover, the recognizing unit 505 includes a word-likelihood calculating unit 511 and a dictionary 512 in which recognizable words are described in strings of subwords (subword string). Specifically, in the recognizing unit 505, the word-likelihood calculating unit 511 using a matching process such as Viterbi algorithm, calculates a word likelihood a subword likelihood that is calculated by the subword-likelihood calculating unit 504 and a subword string of each word that is stored in the dictionary, and a word having the highest word likelihood is output as a word (result of recognition) corresponding to the unknown sound.
Functions of the obtaining unit 501, the element-distribution-likelihood calculating unit 502, the branch-probability changing unit 503, the subword-likelihood calculating unit 504, and the recognizing unit 505 are implemented by the CPU 101 executing a program that is stored in a recording medium such as the ROM 102, the RAM 103, the magnetic disk 105, and the optical disk 107 shown in Fig. 1.

Example

(Procedures in Sound Recognition Process)

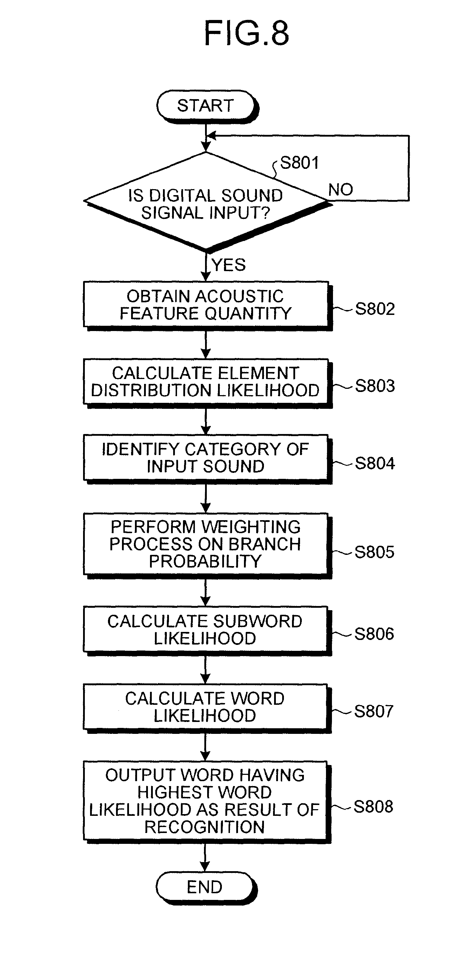

Next, an example of the sound recognition apparatus 500 according to the embodiment described above is explained. Fig. 8 is a flowchart illustrating procedures in a sound recognition process according to the example. As shown in Fig. 8, first, when sound (unknown sound) is received through the microphone 109 shown in Fig. 1 and a digital sound signal obtained by the A/D conversion in the sound I/F 108 is input (step S801: YES), the obtaining unit 501 obtains the acoustic feature quantities A and B concerning the amount of spectrum information and the amount of attribute information of the unknown sound (step S802).
Next, the element-distribution-likelihood calculating unit 502 calculates an element distribution likelihood of each subword for each attribute (step S803). The identifying unit identifies the category of the unknown sound (step S804), and the weighting unit 507 refers to the lookup table 700 for the identified category to weight the branch probability of each subword for each attribute (step S805).
Thereafter, the subword-likelihood calculating unit 504 calculates a subword likelihood using the element distribution likelihood of each subword for each attribute and the branch probability of each subword after the weighting process for each attribute (step S806). Finally, the word-likelihood calculating unit 511 calculates a word likelihood from the subword likelihood and a subword string of each word stored in the word database 512 (step S807), and a word whose calculated word likelihood is highest is output as a word (result of recognition) corresponding to the unknown sound (step S808).
As described, according to the embodiment and the example, the branch probability prepared for each of the different attributes can be adjusted according to a speaking environment or a situation of an unknown sound, and therefore, the recognition rate for an unknown sound can be improved.
In the embodiment and the example described above, it is assumed that the sound source is a human, and therefore, the attribute thereof is set in two types, male and female. However, even for each of male and female, sound varies depending on age or a surrounding environment; therefore, the element distribution and the branch probability of further more attributes for each of male and female can be set.

The sound recognition method explained in the present embodiment can be implemented using a computer, such as a personal computer and a work station, to execute a program that is prepared in advance. This program is recorded on a computer-readable recording medium such as a hard disk, a flexible disk, a CD-ROM, an MO, and a DVD, and is executed by a computer reading from the recording medium. The program can be a transmission medium that can be distributed through a network such as the Internet.

**Claims**

1. A sound recognition apparatus that employs a mixed distribution acoustic model, the sound recognition apparatus comprising:

   an obtaining unit that obtains acoustic feature quantities that concern an amount of spectrum information and an amount of attribute information of an unknown sound;
   an element-distribution-likelihood calculating unit that calculates, based on the acoustic feature quantity that is obtained by the obtaining unit and concerns the amount of spectrum information of the unknown sound and information on an element distribution to which a mixed distribution of each subword in the mixed distribution acoustic model belongs, a likelihood of the element distribution (hereinafter, "element distribution likelihood");
   a changing unit that changes, based on the acoustic feature quantity that is obtained by the obtaining unit and concerns the amount of attribute information of the unknown sound, a branch probability of each subword;
   a subword-likelihood calculating unit that calculates, based on the branch probability changed by the changing unit and the element distribution likelihood calculated by the element-distribution-likelihood calculating unit, a likelihood of a subword (hereinafter "subword likelihood"); and
   a recognizing unit that recognizes, based on the subword likelihood calculated by the subword-likelihood calculating unit, the unknown sound.

2. The sound recognition apparatus according to claim 1, wherein

   the changing unit includes

      an identifying unit that identifies a category of the unknown sound based on the acoustic feature quantity that is obtained by the obtaining unit and concerns the amount of attribute information of the unknown sound; and
      a weighting unit that weights a branch probability of a subword set for each of attributes, based on the category identified by the identifying unit, and

   the subword-likelihood calculating unit calculates the subword likelihood based on the branch probability of a subword that is weighted for each of the attributes by the weighting unit, and the element distribution likelihood that is calculated by the element-distribution-likelihood calculating unit.

3. A sound recognition method that employs a mixed distribution acoustic model, the sound recognition method comprising:

   obtaining acoustic feature quantities that concern an amount of spectrum information and an amount of attribute information of an unknown sound;
   calculating, based on the acoustic feature quantity that is obtained by the obtaining unit and concerns the amount of spectrum information of the unknown sound and information on an element distribution to which a mixed distribution of each subword in the mixed distribution acoustic model belongs, a likelihood of the element distribution (hereinafter, "element distribution likelihood");
   changing, based on the acoustic feature quantity that is obtained by the obtaining unit and concerns the amount of attribute information of the unknown sound, a branch probability of each subword;
   calculating, based on the branch probability changed by the changing unit and the element distribution likelihood calculated by the element-distribution-likelihood calculating unit, a likelihood of a subword (hereinafter "subword likelihood"); and
   recognizing, based on the subword likelihood calculated by the subword-likelihood calculating unit, the unknown sound.

4. A sound recognition program that causes a computer to execute the sound recognition method according to claim 3.

**5.** A computer-readable recording medium that stores therein the sound recognition program according to claim 4.

# FIG.1

FIG.2

EP 1 865 496 A1

# FIG.3

200

| SUBWORD | ELEMENT DISTRIBUTION INFORMATION | |
| --- | --- | --- |
| | MALE | FEMALE |
| sw1 | $\mu 11, \sigma 11$ | $\mu 12, \sigma 12$ |
| ⋮ | ⋮ | ⋮ |
| swk | $\mu k1, \sigma k1$ | $\mu k2, \sigma k2$ |
| ⋮ | ⋮ | ⋮ |
| swm | $\mu n1, \sigma n1$ | $\mu n2, \sigma n2$ |

# FIG.4

210

| SUBWORD | BRANCH PROBABILITY | |
| --- | --- | --- |
| | MALE | FEMALE |
| sw1 | w11 | w21 |
| ⋮ | ⋮ | ⋮ |
| swk | w1k | w2k |
| ⋮ | ⋮ | ⋮ |
| swm | w1m | w2m |

# FIG.5

EP 1 865 496 A1

# FIG.6

EP 1 865 496 A1

# FIG.7

700

| CATEGORY | ATTRIBUTE COEFFICIENT | |
|---|---|---|
| | z1(MALE) | z2(FEMALE) |
| C1 | 1 | 0 |
| C2 | 0 | 1 |
| C3 | 0.5 | 0.5 |
| C4 | 0.5 | 0.5 |

# FIG.8

```
                    ( START )
                        │
                        ▼◄────────────────┐
                      ╱─────╲   ⌐S801      │
                    ╱         ╲            │
                  ╱  IS DIGITAL ╲   NO     │
                 ╲  SOUND SIGNAL ╱─────────┘
                  ╲   INPUT?   ╱
                    ╲         ╱
                      ╲─────╱
                        │ YES
                        ▼
          ┌─────────────────────────┐
          │     OBTAIN ACOUSTIC     │───S802
          │    FEATURE QUANTITY     │
          └─────────────────────────┘
                        │
                        ▼
          ┌─────────────────────────┐
          │   CALCULATE ELEMENT     │───S803
          │ DISTRIBUTION LIKELIHOOD │
          └─────────────────────────┘
                        │
                        ▼
          ┌─────────────────────────┐
          │   IDENTIFY CATEGORY OF  │───S804
          │      INPUT SOUND        │
          └─────────────────────────┘
                        │
                        ▼
          ┌─────────────────────────┐
          │    PERFORM WEIGHTING     │
          │   PROCESS ON BRANCH      │───S805
          │      PROBABILITY         │
          └─────────────────────────┘
                        │
                        ▼
          ┌─────────────────────────┐
          │   CALCULATE SUBWORD     │───S806
          │      LIKELIHOOD         │
          └─────────────────────────┘
                        │
                        ▼
          ┌─────────────────────────┐
          │    CALCULATE WORD       │───S807
          │      LIKELIHOOD         │
          └─────────────────────────┘
                        │
                        ▼
          ┌─────────────────────────┐
          │   OUTPUT WORD HAVING     │
          │     HIGHEST WORD         │
          │  LIKELIHOOD AS RESULT OF │───S808
          │      RECOGNITION         │
          └─────────────────────────┘
                        │
                        ▼
                    (  END  )
```

| INTERNATIONAL SEARCH REPORT | | International application No. |
|---|---|---|
| | | PCT/JP2006/304577 |

A. CLASSIFICATION OF SUBJECT MATTER
*G10L15/10*(2006.01), *G10L15/06*(2006.01), *G10L15/14*(2006.01)

According to International Patent Classification (IPC) or to both national classification and IPC

B. FIELDS SEARCHED

Minimum documentation searched (classification system followed by classification symbols)
*G10L15/10*(2006.01), *G10L15/06*(2006.01), *G10L15/14*(2006.01)

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 10-282986 A  (Hitachi, Ltd.), 23 October, 1998 (23.10.98), Claim 9; Par. No. [0012] (Family: none) | 1-5 |
| Y | JP 7-28488 A  (Canon Inc.), 31 January, 1995 (31.01.95), Par. Nos. [0010] to [0013]; Fig. 2 (Family: none) | 1,3-5 |
| Y | JP 60-129795 A  (Oki Electric Industry Co., Ltd.), 11 July, 1985 (11.07.85), Full text; all drawings (Family: none) | 1,3-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 April, 2006 (04.04.06) | 11 April, 2006 (11.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/304577 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 57-22300 A  (Fujitsu Ltd.),<br>05 February, 1982 (05.02.82),<br>Full text; all drawings<br>(Family: none) | 1,3-5 |
| A | JP 3316355 B  (Sanyo Electric Co., Ltd.),<br>07 June, 2002 (07.06.02),<br>Par. Nos. [0089] to [0090]<br>(Family: none) | 2 |

Form PCT/ISA/210 (continuation of second sheet) (April 2005)